# EUROPEAN PATENT APPLICATION

(11) **EP 4 446 825 A1**
(43) Date of publication of application: **16.10.2024**
(21) Application number: 23167969.7
(22) Date of filing: 14.04.2023
(51) Int. Cl.: G05B 15/02

(54) **COMPUTERIMPLEMENTED METHOD FOR APPLYING NEW SOFTWARE-CONTROLLED SERVICES A BUILDING CONTROL SYSTEM**

(71) Applicant: Siemens AG Österreich, 1210 Wien (AT)
(72) Inventor: Krammer, Lukas, 1220 Wien (AT); Bischof, Stefan, 1080 Wien (AT); Fernbach, Andreas, 3370 Ybbs an der Donau (AT); Xavier Parreira, Josiane, 1110 Wien (AT)
(74) Representative: Siemens Patent Attorneys

(57) **Abstract**

The present invention discloses a method for applying new services to an existing building comprising a building control system that is represented by a digital building representation, comprising the steps of:
a) providing the digital building representation in form of a semantic building model;
b) providing a catalog of add-on functions, said add-on functions representing the new services and being enabled to improve the smartness and/or the energy efficiency of the building control system when deployed on the building control system;
c) automatically checking the add-on functions against a set of digital building representations thereby searching for matches of the add-on functions available in the catalog and the semantic building models; and
d) in case of matches, deploying the add-on function within the building control system of the respective building and its technical equipment controlled by the building control system.

ix) checking whether, how-often and how additional services (that possibly increase the SRI score) can be installed to the respective building by applying a set of rules to the building semantic model (these rules also compute the gain of each additional service in terms of different metrics, such as SRI score, and the requirements in terms of hardware, software)
x) reporting the results of the check to the user in form of a recommendation
xi) if additional services are applicable and automatically deployable, request the user for purchase and downloading a valid selection (by selecting an additional service it is checked by applying parts of the semantic rules whether the service fits to the in quantity and to the already selected services)
xii) if additional services are purchased, they are configured by using the digital building representation and downloaded to an execution environment in the building (if such an environment is not yet available, the check in ix) will show specific hardware requirements; the purchase and automatic configuration is possible anyways).

Moreover, it is the basis for recommendation of fitting additional services for the specific building. Having the user in the loop, the system allows for automatically configure additional services for a specific building and finally deploy the service into an execution environment, which in turn improves the automation of the actual building.

## Description

The present invention relates to a computer-implemented method for applying new software-controlled services to a building control system of an existing building.

Buildings usually have a long lifecycle and need to adapt and improve over time. However, in many cases, this adaptation and improvement (especially in the case of technical building equipment such as HVAC, lighting, and security) requires a change in hardware or a sophisticated and expensive adaptation of the automation system. Even if the hardware does not need to be replaced, the effort for adapting the software is significant.

Currently, there is a trend to weaken the dependency between hardware and software by cloud and edge technologies. For example, edge devices and the respective connectivity to a cloud platform typically offer a runtime- and system management environment for easy deployment of new applications, without any need of physical on-site actions.

In such an environment, it is possible to check the applicability of new software services to specific building automation systems to improve their smartness or energy efficiency (e.g., with respect to the Smart Readiness Indicator score as defined in Energy Performance of Buildings Directive (2010/31/EU)). Depending on the availability of data in a building, different types of checks can be considered. In the best case the check includes the matching of the existing system and the add-on function at datapoint level such that the add-on can be automatically applied to building automation systems (BASs) without further manual interventions. However, even in case fully automatic interventions are not possible, checks on the applicability of add-ons shall still be possible.

Furthermore, add-on functions can be automatically deployed on site and preconfigured to a certain extend if desired/ordered by the building owner/operator. Even if the check does not allow for a deterministic decision, still a recommendation of a service is possible, whereas detailed checks, configuration and deployment are done manually.

In either case, it is possible that it could be applied to a high number of buildings in an automatic way.

Basically, the approach relies on different types of information, listed below. Depending on the type of building, the type of technical equipment and the type of automation system, the method for gathering the necessary information differs.

The technical building equipment comprises different domains that are related to the services of the SRI. Thereby, it is distinguished between (*) heating, (*) ventilation, (*) air conditioning (i.e., cooling), (*) lighting, (*) shading. Besides these traditional domains, new domains such as (*) local energy production and (*) e-car charging come into play. For any of these domains it is desirable to have information on the (*) physical devices, (*) their function and (*) the relation among them. Additionally, information about the geometry of the building and the contained equipment is necessary.

Information on the existing automation system and its methods to control the underlying technical equipment is also necessary for applying add-on functions. This includes hardware components as well as the functions and datapoints that control the technical equipment.

Besides this functional aspect, also non-functional information on the automation system is required. It needs to be known, how functions and parameters are defined, where functions are hosted and how/if add-on functions can influence/overrule existing ones.

To enable automated processing of these types of information, they need to be represented in a structured and machine-readable form. For this purpose, semantic models have become state-of-the-art in recent years. While Brick, SAREF or BOT are publicly available, Siemens follows an approach of collecting and combining concepts and models for having a consistent model for domains relevant for Siemens. This so called "Domain Modelling @ BT" initiative (cf. BTDom) already contains models for assets (building equipment), location (geometry), function models (containing functions and datapoints), and even non-functional aspects of the automation system (point model). While a taxonomy on the functions is missing, the BTDom model can be easily extended to include those.

To feed information from individual systems into these information models, the specific properties of the systems must be considered. While asset models can be adopted from equipment databases or ERP systems (e.g., Siemens' iBASE) or respective schemas (if available in machine-readable form), the functional models strongly depend on the type of automation technology. In the case of distributed automation with devices dedicated to a specific purpose (e.g., KNX), the function and its datapoints are implicitly defined by the type of device.

In general, it is not possible to adopt a functional model. However, if specific function blocks are specified and used (e.g., according to ISO 16484), a functional model can be adopted. For example, in the case of Desigo^{®} PX controllers, a specific functional model is used. The naming scheme of the datapoints in combination with the respective dictionary allows for mapping the functions to a taxonomy.

There are several building management systems, offering different services from building data acquisition and management, to controlling, scheduling and maintenance. A specific service add-on focused on building upgrades with the goal of improving the SRI score of buildings is currently missing from all the available market systems. Currently, recommendations for building upgrades can be made by specifically searching customer databases (semi-automatic) or documents of a customer project (manual). In context of SRI and specific improvements of the respective score, only manual inspection of current SRI and potential measures for SRI improvement is known as a state-of-the-art approach.

Therefore, it is the objective of the present invention to provide a system that allows for automatically checking many buildings for the applicability of a catalog of new functions which also enables procedures in a sense that customers can be directly addressed with specific offerings including automatically calculated value and effort. Further, it would be desirable in case an appropriate hardware (i.e., runtime environment for deploying apps such as Horizon Edge or an industrial PC including a CI/CD chain) is available on-site, to automatically deploy add-on functions, even if parameters for some add-on-functions are required, the framework shall still offer a highly scalable way for upgrading buildings.

This objective is achieved according to the present invention by a method for applying new software-controlled services to a building control system of an existing building wherein the building is represented by a digital building representation, said method comprising the steps of:
a) providing the digital building representation in form of a semantic building model;
b) providing a catalog of add-on functions, said add-on functions representing the new services and being enabled to improve the smartness and/or the energy efficiency of the building control system when deploying the add-on function to the building control system;
c) automatically checking the add-on functions against a set of digital building representations thereby searching for matches of the add-on functions available in the catalog and the semantic building models; and
d) in case of matches, deploying the add-on function within the building control system of the respective building and its technical equipment controlled by the building control system.
e) automatically configuring the add-on function according to the semantic building model of each match and if necessary, offer specific configuration interfaces.

Thus, the present invention paves a way allowing for automatically checking a large number of buildings for the applicability of new service that are comprised in the catalog of new add-on functions. This also enables procedures in a sense that operators of a building control system for specific buildings can automatically deploy the add-on function by the identification of matches of the add-on functions in the catalog and the individual semantic building models that represent the respective buildings.

Further, preferred embodiments of the present invention are listed in the attached dependent claims.

Preferred embodiments of the present invention are hereinafter described in more detail.

The present invention proposes a framework system that allows for applying new services to existing buildings. The framework system comprises a catalog of so-called add-on functions that improve the smartness and/or energy efficiency of a building. Depending on the add-on function, the new framework system automatically checks whether the add-on function can be applied to a specific building and its technical equipment by checking the digital building representation.

Presently, it is assumed that the digital building representation is available in the form of a semantic building model (e.g., Brick, SAREF, BOT, BTDom or a valid combination of this kind). Such a semantic building model is either natively available (unlikely for older buildings) or can be composed out of the automation system (e.g., it is possible to use a dictionary in combination with the Siemens BA model to deduce the relevant information for a digital building representation).

The framework system automatically checks a set of digital building representations by trying to match any of the add-on functions in the catalog. The rules and procedures for the matching process are part of the add-on functions and determine whether and how an add-on function can be applied. If there is a match, a function can either be directly applied (if all requirements such as connectivity and runtime environment) or suggested as an offer to a sales representative or directly to the customer.

Depending on the intended purpose of the framework system, a trade-off between effort and customer value, each add-on function contains a description on improvements and effort.

### Add-on functions

Add-on functions are additional functions that can be applied to an existing automation system in order to improve the automation capabilities which in turn improve the performance and energy efficiency of a building. Such functions take existing sensor data or datapoints of the automation system as input, perform specific control functions and update/override specific datapoints or control values of the existing system. They can also implement alarming, fault detection and respective notification services. The add-on functions are realized in a modular way, such that it can be deployed within a container to a base system on site.

This base system needs to be connected to the automation system and usually allows for hosting, deploying and updating various containers with add-on functions (e.g., Horizon Edge).

The add-on function comprises of the following parts: Control/Command/Monitoring function: The core of each add-on is its control function. It uses a set of mandatory and optional inputs, processes them, and finally sets outputs accordingly. Control functions are either stateless or stateful. They can be triggered periodically (i.e., control interval) or triggered by an external signal or an intrinsic timer function (e.g., for realizing schedules).

Parameter set: Some control functions need configuration parameters as additional input (e.g., time schedules). Basically, it is possible to adopt parameters from available information of the building. However, in many cases parameters for add-on functions can just be estimated. These estimates are also specified in the add-on function. They can be based on assumptions at the time of defining the function (default value) or depend on some specific information on the building. In this case the according query is also part of the add-on. The application of parameters follows a step-by-step approach starting with queries with a high confidence (i.e., parameters can automatically be set and applied) over queries with less confidence (i.e., best guesses that must be approved and manually adjusted) to default values. For example, heating schedules can be estimated well as they strongly depend on the usage of the building. Schools have different daily schedules than office buildings or apartment buildings. On top of that, all the schedules depend on the geographic region where they are applied.

### Matching mechanism

The criteria for matching an add-on function to a specific building is an important part in the system. It is essential for applying add-ons automatically and in a scalable way. Since the available information on the building and the automation system is mapped to a semantic model, the matching procedure is also realized as a query-based procedure. The queries are formulated in such a way that even if less information sources are available, recommendations are still possible (best effort). Requirements for application (matching) are specified in form of semantic queries which cover:
i) Functional requirements (e.g., automation function, parameter configuration, datapoint configuration, interface configuration); and
ii) Hardware requirements (e.g., additional hardware required, edge device).

Besides these qualitative requirements also quantitative requirements are checked in a way to determine how often an add-on function can be applied to a specific building (more precisely its semantic model.

### Interdependencies

Basically, add-on functions could not just depend on specific hardware or functions of the already existing building but could also rely on each other. This is possible by applying mechanisms that are already in use in package management systems (e.g., of LINUX distributions). However, it may increase the complexity of this approach and may limit explainability and scalability.

### Improvements

As this approach strongly focuses on improving the building energy performance, its achievable improvements can be directly related to levels of specific SRI services. Morevoer, it is possible to apply more than one add-on function or apply one add-on function multiple times even if the application of one add-on function would be sufficient to lift the SRI level. Basically, it is possible to apply additional metrics for evaluating smartness or energy efficiency to the existing building and the catalog of add-on functions.

### Effort

Each add-on function has also a defined effort in terms of engineering. This effort ranges from almost zero (if a function can directly be applied) to a configuration specifically for one building. The effort estimates the effort of a human engineer to (*) adapt the existing system, (*) configure the add-on function, and (*) deploy the add-on function.

Local add-ons with local functions are applied to specific subsystems. They require a set of input and output parameters from the same context. The context can be the same location or the same part of the HVAC system (for example, temperature control within a room). In this case it is required to identify the type of subsystem where the function is applied and the according set of datapoints. However, knowledge about the overall system and the relation among subsystems is not necessary. After querying the hardware (see above), a query checks whether the basic function is available, where the add-on is applied to, and whether it is related to the relevant hardware. If this function is found at least once, it queries whether the mandatory datapoints are available and related to the function. If this is the case, sets of optional datapoints that offer additional value of the add-on are queried subsequently (sets are not necessarily distinct). If a match was found the process is stopped.

Local add-ons with global requirements need additional input and output parameters from a global or implicit context. Thereby, it is distinguished between a primarily addressed subsystem and another subsystem whereas the function is applied to the primary subsystem and the other subsystem only supports the primary functions. For example, consider a room controller relying on information of an outside temperature sensor. The add-on can be applied to each fitting entity of the primary subsystem while the relation between primary and supporting subsystem is implicit or not relevant for the application. Like local functions, queries for hardware and the basic functions (primary) are executed. If there is at least one matching function, a further query is conducted on either another basic function or on specific datapoints. The relation between the primarily addressed subsystem and the other subsystem is not relevant.

Complex add-ons require different sets of input and output parameters out of multiple physical or functional areas, whereas the functional areas themselves are again in a higher-level functional relation. In order to apply such an add-on, a functional description of the HVAC system is required. Complex add-ons are matched in an iterative way. In a first step, sets of matching subsystems are identified by sets of queries (e.g., a set of variable air valves and a set of air handling units). Then, it is queried whether the relation among any of the selected subsystem matches the requirements of the add-on function. Hereby, the number of matches is not limited, but the final sets of subsystems where one instance of an add-on function is applied must be distinct.

Other add-ons cannot be automatically configured based on the available information in a building and require at least some human input. These add-ons can either be simple or complex. In either case a configuration UI is proposed that allows editing the necessary parameters on a larger scale. The same add-ons for similar buildings with similar usage are grouped. Supporting this, sets of parameters are further suggested by the UI and just need to be confirmed. Consider for example a schedule for a heating or cooling system. The schedule may differ from building to building, but if the usage is considered, a proper schedule can be suggested. Office buildings in the same geographical area may have similar schedules. The same applies for schools, apartment buildings or supermarkets.

## Claims

1. A computer-implemented method for applying new software-controlled services to a building control system of an existing building wherein the building is represented by a digital building representation,
comprising the steps of:
a) providing the digital building representation in form of a semantic building model;
b) providing a catalog of add-on functions, said add-on functions representing the new services and being enabled to improve the the energy efficiency of the building control system when deploying the add-on function to the building control system;
c) automatically checking the add-on functions against a set of digital building representations, thereby searching for matches of the add-on functions available in the catalog and the semantic building models; and
d) in case of matches, deploying the add-on function within the building control system of the respective building and its technical equipment controlled by the building control system.
e) in case of matches configuring the add-on function according to its function and the respective semantic model of the building.

2. The method according to claim 1, wherein the semantic building model is either natively available or is composed out of the building control system, in the latter case preferably using a dictionary to deduce terms out of the building control system for the generation of the semantic building model for the digital building representation.

3. The method according to claim 1 or 2, wherein
for the matches, the respective add-on function is directly applied, preferably when all requirements in terms of connectivity and runtime environment are fulfilled or is suggested in terms of a retrievable ready for deployment marker.

4. The method according to any of the preceding claims, wherein the searching for matches is realized as a query-based procedure, wherein the queries are formulated in form of semantic queries which cover:
i) functional requirements, e.g., automation function, parameter configuration, datapoint configuration, interface configuration; and/or
ii) hardware requirements, e.g., additional hardware required, edge device.
